Europäisches Patentamt

European Patent Office

Office européen des brevets

(11) Numéro de publication : **0 376 397 B1**

## (12) FASCICULE DE BREVET EUROPEEN

(45) Date de publication du fascicule du brevet :
**22.03.95 Bulletin 95/12**

(51) Int. Cl.⁶ : **H04L 27/10**

(21) Numéro de dépôt : **89203276.4**

(22) Date de dépôt : **20.12.89**

(54) **Dispositif de transmission d'informations utilisant une modulation en fréquence.**

(30) Priorité : **27.12.88 FR 8817229**

(43) Date de publication de la demande :
**04.07.90 Bulletin 90/27**

(45) Mention de la délivrance du brevet :
**22.03.95 Bulletin 95/12**

(84) Etats contractants désignés :
**DE FR GB IT SE**

(56) Documents cités :
**FR-A- 1 435 148**
**L'ONDE ELECTRIQUE, vol. 51, fascicule 3, mars 1971, pages 232-242, Paris, FR;G. DAVID et al.: "Transmission radioélectrique au moyen d'une modulation linéaire en fréquence"**

(73) Titulaire : **TELECOMMUNICATIONS RADIOELECTRIQUES ET TELEPHONIQUES T.R.T.**
**88 rue Brillat Savarin**
**F-75640 Paris Cédex 13 (FR)**
(84) **FR**
Titulaire : **Philips Electronics N.V.**
**Groenewoudseweg 1**
**NL-5621 BA Eindhoven (NL)**
(84) **DE GB IT SE**

(72) Inventeur : **Chelouche, Marc**
**Societe Civile S.P.I.D.**
**209 rue de l'Université**
**F-75007 Paris (FR)**
Inventeur : **Magne, François**
**Societe Civile S.P.I.D.**
**209 rue de l'Université**
**F-75007 Paris (FR)**

(74) Mandataire : **Chaffraix, Jean et al**
**Société Civile S.P.I.D.**
**156, Boulevard Haussmann**
**F-75008 Paris (FR)**

## Description

La présente invention concerne un dispositif d'informations utilisant une modulation de fréquence, et comportant :
- un circuit d'émission constitué à partir d'un oscillateur muni d'une commande de fréquence, pour émettre une onde de transmission d'information,
- un circuit de commande de fréquence pour fournir à ladite commande des signaux présentant des amplitudes et des pentes, ces amplitudes et le signe de ces pentes dépendant de l'information à transmettre.

De tels dispositifs sont bien connus. Par exemple, on pourra à ce sujet conseiller l'article de G.DAVID et al. intitulé "Transmission radioélectrique au moyen d'une modulation linéaire en fréquence" paru dans la revue L'ONDE ELECTRIQUE de mars 1971, vol.51, fasc.3, aux pages 233-242.

Dans ce dispositif connu, l'information constituée d'éléments binaires de valeur "1" et "0" est transmise en affectant une pente de valeur "p" pour les éléments binaires "1" et de valeur "-p" pour les éléments binaires "0".

L'article cité donne tous les avantages de ce genre de liaison : notamment résistance au brouillage et amélioration du rapport signal sur bruit au niveau récepteur en utilisant des techniques de corrélation. Cependant avec ce genre de dispositif on est confronté aux effets perturbateurs engendrés à chaque discontinuité de fréquence survenant brutalement entre chaque élément binaire de même valeur.

La présente invention propose un dispositif du genre mentionné dans le préambule qui évite toute discontinuité dans les variations de fréquence quelle que soit la séquence d'éléments binaires à transmettre.

Pour cela un tel dispositif est remarquable en ce que le circuit de commande comporte :
- des moyens de détermination, en fonction de l'information à transmettre, de la valeur absolue de la pente des signaux fournis à ladite commande,
- des moyens de changements du signe de la pente des signaux fournis à ladite commande, commandés en outre par des moyens détecteurs de leur amplitude.

La description suivante, accompagnée des dessins ci-annexés, le tout donné à titre d'exemple non limitatif fera bien comprendre comment l'invention peut être réalisée.

La figure 1 représente le schéma d'un dispositif d'émission selon l'invention.

La figure 2 montre l'allure de signaux présents à l'intérieur du dispositif d'émission de la figure 1.

La figure 3 représente le schéma d'un dispositif de réception selon l'invention.

La figure 4 montre l'allure de signaux présents à l'intérieur du dispositif de réception de la figure 3.

La figure 5 montre un dispositif de transmission formé d'organes d'émission-réception constitué chacun par un dispositif d'émission et un dispositif de réception montrés aux figures 1 et 3.

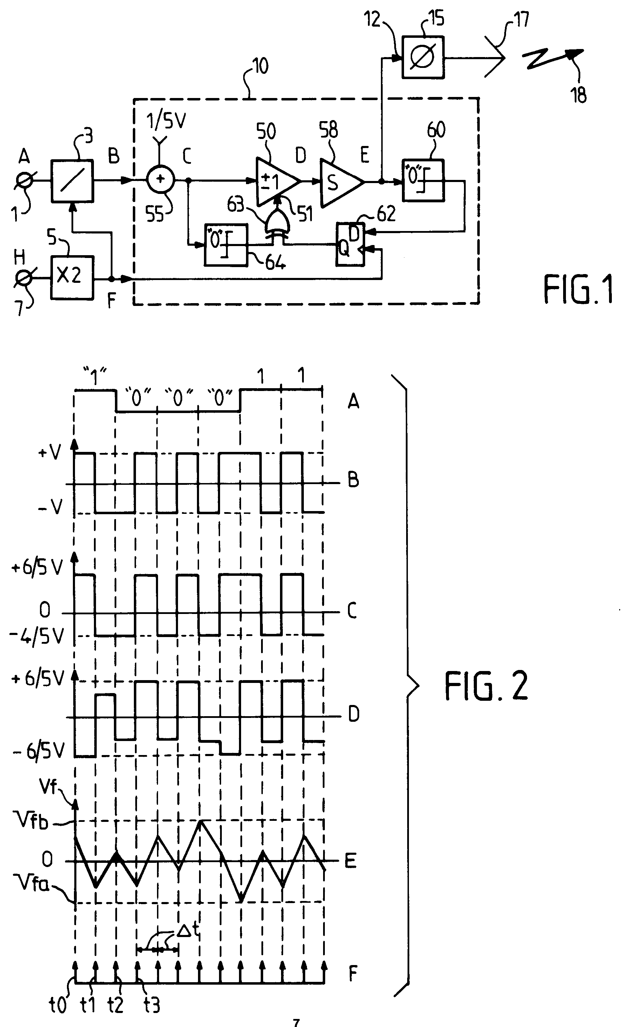

A la figure 1 on a représenté un dispositif d'émission selon l'invention. La référence 1 indique la borne d'entrée à laquelle on applique un signal A représentant les données à transmettre, soit par exemple une séquence de "1" et de "0" telle que :

1, 0, 0, 0, 1, 1,...

comme cela est représenté à la figure 2, ligne A. Afin de faciliter la restitution des données en fin de transmission, ces données sont codées en code biphase par le codeur 3 à l'aide d'un signal F provenant d'un doubleur de fréquence 5 qui double la fréquence des signaux d'horloge H appliqués à la borne 7, accompagnant les données à la borne A. Le code biphase ainsi formé est représenté en B à la figure 2. Ce signal évolue de -V à +V volts. Chacune de ces valeurs va être transmise par une modulation de fréquence de pente différente. Les signaux B sont appliqués à un circuit de commande de fréquence 10 qui agit, en fonction des signaux B, sur la commande 12 d'un oscillateur 15 dont la fréquence varie en fonction de la tension appliquée à sa commande 12. Une antenne 17 émet dans l'espace une onde 18 élaborée à partir de l'oscillateur 15.

Le dispositif de réception comporte une antenne de réception 20 pour capter l'onde 18 afin qu'un circuit de réception 22 puisse élaborer un signal facile à démoduler. Ce circuit opère un changement de fréquence obtenu par un mélangeur 25 et un oscillateur 27 et une amplification à fréquence intermédiaire apportée par un amplificateur 29. Les signaux de sortie R de ce circuit 22 sont appliqués à un circuit démodulateur 35 qui fournit, d'une part, les signaux démodulés à une borne de sortie 37 et les signaux d'horloge correspondant à ces signaux démodulés à la borne 38.

La modulation utilisée par le dispositif de l'invention est une modulation de fréquence qui fait correspondre à une première valeur du signal B (+V) une pente p1 de variation de fréquence dF1 pour une durée de temps dt1 :

$$p1 = \frac{dF1}{dt1}$$

et à une deuxième valeur du signal B (-V) une pente p2 de variation de fréquence dF2 pour une durée de temps dt2 :

$$p2 = \frac{dF2}{dt2}$$

Selon l'invention, pour éviter les discontinuités de fréquence survenant aux changements de pente, le circuit de commande comporte des moyens de changement de signe de pente constitués par un amplificateur programmable 50 dont le gain peut prendre deux valeurs +1 et -1 en fonction d'un signal logique "1" et "0" respectivement, appliqué à son entrée de programmation 51. L'entrée de cet amplificateur reçoit un signal C issu d'un circuit de sommation 55 qui ajoute une tension $(1/5)V$ au signal B. Le signal D à la sortie de l'amplificateur 50 est appliqué à un circuit intégrateur 58 qui fournit un signal E en direction de la commande de fréquence 12 de l'oscillateur 15. Ce signal est une tension Vf qui varie de $-Vf_a$ à $+Vf_b$ volts. Ceci correspond, selon une relation linéaire, à des fréquences de $f_0-f_a$ et $f_0+f_b$, $f_0$ correspondant à une tension nulle. Le signal E est aussi appliqué à l'entrée d'un circuit à seuil 60 qui fournit un signal logique "0" à sa sortie pour une tension négative appliquée à son entrée et un signal logique "1" pour une tension positive ou nulle. Une bascule de type D 62 reçoit sur son entrée de donnée le signal fourni par le circuit 60 et sur son entrée d'horloge le signal F. Le signal de sortie de cette bascule est appliqué à l'entrée de programmation 51 de l'amplificateur 50 par l'intermédiaire d'une porte OU-EXCLUSIF 63 qui reçoit un signal issu d'un deuxième circuit à seuil 64 dont l'entrée reçoit le signal C. Ce circuit à seuil 64 fournit un signal logique "0" pour une tension négative appliquée à son entrée et un signal "1" pour une tension positive ou nulle.

Il est possible, maintenant, d'expliquer le fonctionnement du circuit de commande 10. On se reporte à la figure 2 et l'on examine le signal B ; celui-ci évolue de +V à -V et l'on se propose d'associer à la valeur +V une pente de variation p1 et à la valeur -V une pente p2, p1 et p2 étant considérés en valeur absolue.

Au moyen du circuit de sommation 55 on décale les niveaux de $(1/5)V$ de sorte que lorsque le signal B est égal à +V le signal C est égal à $(6/5)V$ et lorsque le signal B est égal à -V, le signal C est égal à $-(4/5)V$. Le reste du montage va faire correspondre d'une manière proportionnelle les valeurs $(6/5)V$ et $-(4/5)V$ aux pentes p1 et p2 :

$$p1 = \pm k(6/5).V$$

$$p2 = \pm k(4/5).V$$

Le choix du signe + ou du signe - dépend notamment du signal appliqué à la commande 51 et k est une constante de proportionnalité.

On considère l'instant $t_0$ où l'on admet que la tension $Vf>0$. A cet instant surgit un front actif du signal F ; celui-ci provoque l'enregistrement d'une valeur "1" provenant du circuit 60 dans la bascule 62. La porte 63 recevant aussi un signal "1" du circuit 64 fournit donc un "0". L'amplificateur 50 est mis en position d'inverseur de sorte que le signal D prend la valeur $(-6/5).V$ correspondant à la valeur du signal C. Le signal E évolue d'une manière linéaire d'une valeur Vf positive à une valeur négative entre l'instant $t_0$ et un instant $t_1$ qui survient à l'apparition du prochain front actif du signal d'horloge F. Comme la valeur E est négative avant l'instant $t_1$, après cet instant l'amplificateur 50 est mis en position inverseur car la porte OU-EXCLUSIF fournit un signal de valeur "0" en réponse aux signaux "0" issus respectivement de la bascule 62 et du circuit à seuil 64. La tension E évolue avec la pente p2 à partir de la tension négative jusqu'à une autre tension positive à l'instant $t_2$ où survient un front actif du signal F. Après cet instant le signal à la sortie de la porte 63 devient "1" puisque les signaux aux sorties des éléments 62 et 64 deviennent respectivement égaux à "1" et "0". A l'instant $t_3$ la tension E est négative, ce qui entraîne que le signal à la sortie de la bascule 62 est "0" et comme le signal C devient positif, à cet instant l'amplificateur 50 est mis en position non-inverseur de sorte que la tension E redevient positive après un temps $\Delta t$ et ainsi de suite. La suite du raisonnement pourra être faite en s'aidant de ce qui a été dit ci-dessus. On se rend compte que la tensison Vf ne pourra jamais excéder des valeurs $Vf_b$ et $- Vf_a$ dépendant des valeurs des pentes $p_1$ et $p_2$ choisies et des valeurs des amplitudes du signal C.

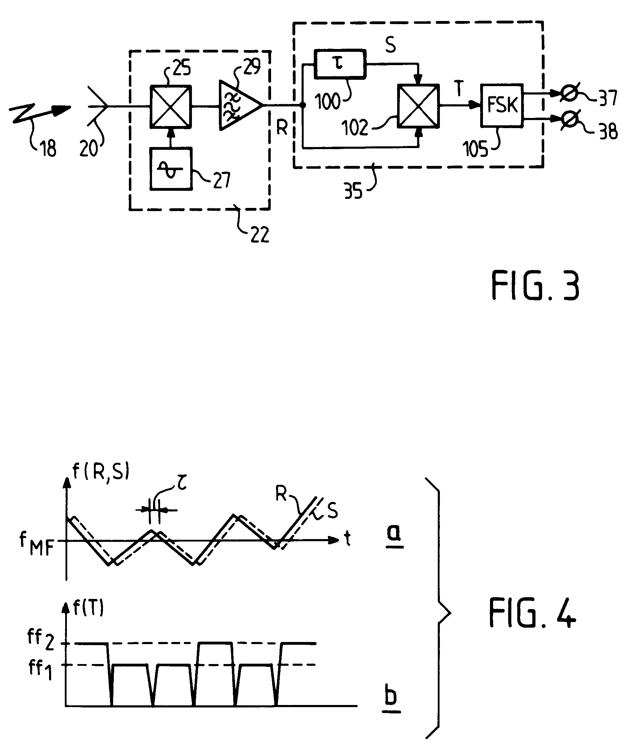

A la figure 3, on a représenté schématiquement la structure du circuit démodulateur 35. Il se compose d'une ligne à retard 100 pour retarder de $\tau$ le signal R à la sortie du circuit 22. Un mélangeur 102 effectue le mélange des signaux R et S (à la sortie de la ligne 100).

A la figure 4a on a représenté les variations de fréquence des signaux R et S ; on montre que le signal T issu du mélangeur fournit des signaux de fréquence ff1 et ff2 représentant les pentes p1 et p2 :

$$ff1 = p1.\tau$$

$$ff2 = p2.\tau$$

La figure 4b montre les variations de fréquence du signal T en correspondance. Un récepteur FSK conventionnel 105 connecté à la sortie du mélangeur 102 rétablit les données à la borne 37 et le signal d'horloge à la borne 38.

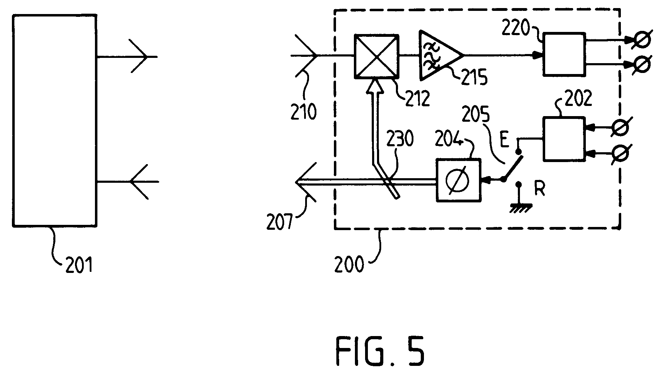

La figure 5 montre un dispositif de transmission dont chaque organe d'émission-réception fonctionne en alternat. Sur cette figure on a représenté deux organes d'émission-réception 200 et 201 de structure identique. Seul l'organe 200 est montré en détail. En ce qui concerne sa partie émission il est composé d'un circuit de commande 202 de structure identique à celle du circuit 10 recevant des données déjà codées sous forme biphase. Le signal de sortie de ce circuit 202 est appliqué à la commande de fréquence d'un oscillateur d'émission 204 par l'intermédiaire d'un commutateur d'alternat 205 mis en position émission. Une antenne 207 rayonne dans l'espace l'onde engendrée à partir des signaux de sortie de l'oscillateur 204.

La partie réception se compose d'une antenne réception 210, d'un mélangeur 212, d'un amplificateur à fréquence intermédiaire 215 et d'un récepteur FSK 220 pour restituer les données. Dans cet organe l'oscillateur d'émission 204 sert aussi d'oscillateur local pour la partie réception. Un coupleur directif 230 prélève une partie de l'onde à la sortie de l'oscillateur 204 tandis que sa commande de fréquence reçoit une tension fixe par l'intermédiaire de la commande d'alternat mise en position réception.

Pour fixer les idées on donne les ordres de grandeur suivants :
- fréquence porteuse de l'onde 18 : ~ 55 GHz
- dF1 ~ 180 MHz
- dF2 ~ 120 MHz
- ff1 = 18 MHz
- ff2 = 12 MHz

pour $\tau$ = 50 ns et dt1 = dt2 = $\Delta$t = 0,5 $\mu$s.

Bien que nous venions de décrire un exemple dans lequel on utilise le code biphasé pour transmettre les données, il va de soi que l'invention couvre aussi n'importe quels autres procédés de codage : codes HDB3 ou similaires, codes obtenus après brouillage,...

**Revendications**

1. Dispositif d'émission d'informations utilisant une modulation de fréquence, et comportant :
    - un circuit d'émission constitué à partir d'un oscillateur (15) muni d'une commande de fréquence (12), pour émettre une onde de transmission d'information,
    - un circuit de commande de fréquence (10) pour fournir à ladite commande (12) des signaux présentant des amplitudes et des pentes, ces amplitudes et le signe de ces pentes dépendant de l'information à transmettre,

caractérisé en ce que le circuit de commande (10) comporte :
    - des moyens (55) de détermination, en fonction de l'information à transmettre, de la valeur absolue de la pente des signaux fournis à ladite commande,
    - des moyens (50) de changements du signe de la pente des signaux fournis à ladite commande (12), commandés en outre par des moyens détecteurs de leur amplitude (60).

2. Dispositif d'émission d'informations selon la revendication 1 pour lequel l'oscillateur (15) est du type à commande de fréquence par tension, caractérisé en ce que les moyens détecteurs de l'amplitude des signaux fournis à ladite commande sont constitués par un détecteur de niveau de la tension (60) desdits signaux.

3. Dispositif d'émission d'informations selon la revendication 2, caractérisé en ce que les moyens de changement du signe de la pente des signaux fournis à ladite commande sont constitués par un circuit inverseur-non-inverseur programmable (50) pour inverser des signaux de tension en fonction des données à transmettre tandis que la position inverseur-non-inverseur de ce circuit (50) est déterminée par une bascule (63) chargeant au rythme des informations la valeur fournie par le détecteur de niveau (60).

4. Dispositif de réception d'informations ayant été émises par un dispositif d'émission d'informations selon l'une des revendications 1 à 3, caractérisé en ce qu'il comporte :
    - un circuit de réception (22) pour fournir un signal à démoduler,
    - un circuit de démodulation (35) pour recevoir le signal à démoduler, comprenant une ligne à retard (100) pour retarder le signal à la sortie du circuit de réception et un mélangeur (102) pour effectuer le mélange des signaux d'entrée et de sortie de la ligne à retard,
    - un circuit discriminateur de fréquence (105) connecté à la sortie du mélangeur pour restituer les informations à un circuit utilisateur.

5. Dispositif de transmission d'informations comprenant au moins un dispositif d'émission d'informations selon l'une des revendications 1 à 3 et un dispositif de réception d'informations selon la revendication 4.

6. Dispositif de transmission d'informations comprenant des organes d'émission-réception, caractérisé en ce que chaque organe d'émission-réception est formé d'un dispositif d'émission d'informations selon l'une des revendications 1 à 3, et d'un dispositif de réception d'informations selon la revendication 4.

7. Dispositif de transmission d'informations selon la revendication 6, caractérisé en ce qu'il comporte une commande d'alternat permettant d'émettre et de recevoir alternativement.

**Patentansprüche**

1. Informationsübertragungsanordnung, bei der eine Frequenzmodulation verwendet wird, und welche die nachfolgenden Elemente aufweist:
    - eine Sendeschaltung, aufgebaut mit einem Oszillator (15) mit einem Frequenzregeleingang (12), zum Senden einer Informationsübertragungswelle,
- eine Frequenzregelschaltung (10) zum Liefern von Eingangssignalen zu dem genannten Regeleingang (12) mit Amplituden und mit Neigungen, wobei diese Amplituden und das Vorzeichen der Neigungen von der zu übertragenden Information abhängig ist. dadurch gekennzeichnet, daß die Regelschaltung (10) die nachfolgenden Elemente aufweist:
- Mittel (55) zum in Abhängigkeit der zu übertragenden Information Bestimmen des Absolutwertes der neigung der dem genannten Eingang zugeführten Signale,
- Mittel (50) zur Änderung des Vorzeichens der Neigung der dem genannten Eingang (12) zugeführten Signale, die außerdem durch Amplitudendetektionsmittel (60) gesteuert werden.

2. Informationsübertragungsanordnung nach Anspruch 1, für die der Oszillator (15) von dem spannungsgesteuerten Typ ist, dadurch gekennzeichnet, daß die Detektionsmittel für die Amplituden der Signale, die dem genannten Eingang zugeführt wurden, durch eine Pegeldetektor für die Spannung (60 der genannten Signale gebildet werden.

3. Informationsübertragungsanordnung nach Anspruch 2, dadurch gekennzeichnet, daß die Mittel zur Änderung des Vorzeichens der Neigung der dem genannten Eingang gelieferten Signale durch eine programmierbaren Inverter-Nicht-Inverter (50) gebildet werden zum Umwandeln der Spannungssignale abhängig von den zu übertragenden Daten, wenn die Lage des Inverters-nicht-Inverters der Schaltungsanordnung (50) durch eine Flip-Flop-Schaltung (63) detektiert wird, die im Takte der Informationen den durch den Pegeldetektor (60) gelieferten Wert ladet.

4. Informationsempfangsanordnung, die Daten empfängt, die mit Hilfe einer Informationsübertragungsanordnung nach einem der Ansprüche 1 bis 3 gesendet worden sind, dadurch gekennzeichnet, daß diese Schaltungsanordnung die nachfolgenden Elemente aufweist:
- eine Empfangsanordnung (22) zum Liefern eines zu demodulierenden Signals,
- eine Demodulationsschaltung (35) zum Empfangen des zu demodulierenden Signals mit einer Verzögerungsschaltung (100) zum Verzögern des Signals am Ausgang der Empfangsanordnung und mit einer Mischstufe (102) zum Durchführen der Mischung der Eingangs- und der Ausgangssignale der verzögerungsschaltung, zum Wiederherstellen der Informationen an einer Gebrauchsschaltung.

5. Informationsübertragungsanordnung mit mindestens einer Informationssendeanordnung nach einem der Ansprüche 1 bis 3 und mit einer Informationsempfangsanordnung nach Anspruch 4.

6. Informationsübertragungsanordnung mit Sende-Empfangsanordnungen, dadurch gekennzeichnet, daß jede Sende-Empfangsanordnung aus einer Sendeanordnung nach einem der Ansprüche 1 bis 3 und aus einer Empfangsanordnung nach Anspruch 4 besteht.

7. Informationsübertragungsanordnung nach Anspruch 6, dadurch gekennzeichnet, daß sie eine Wechselregelschaltung aufweist, wodurch wechselweise gesendet und empfangen werden kann.

## Claims

1. An information sending device using frequency modulation and comprising:
- a sending circuit built up around an oscillator (15) provided with a frequency control (12) for sending an information transmission wave,
- a frequency control unit (10) supplying said control (12) with signals having amplitudes and slopes, said amplitudes and the sign of said slopes being dependent on the information to be transmitted,
characterized in that the control circuit (10) comprises:
- means (55) for determining, as a function of the information to be transmitted, the absolute value of the slope of the signals applied to said control,
- means (50) for changing the sign of the slope of the signals applied to said control (12) which are also controlled by means (60) for detecting their amplitude.

2. An information sending device as claimed in Claim 1, for which the oscillator (15) is of the type whose frequency is voltage-controlled, characterized in that the means for detecting the amplitude of the signals applied to said control are formed by a detector (60) for detecting the level of the voltage of said signals.

3. An information sending device as claimed in Claim 2, characterized in that the means for changing the sign of the slope of the signals applied to said control are formed by a programmable inverting/non-inverting circuit (50) for inverting the voltage signals as a function of the data to be transmitted, the inverting/non-inverting state of this circuit (50) being determined by a flipflop (63) which stores the value produced by the level detector (60) at the rate of the information.

4. A device for receiving information transmitted by an information sending device as claimed in any one of the Claims 1 to 3, characterized in that it comprises:
   - a receiving circuit (22) for supplying a signal to be demodulated,
   - a demodulation circuit (35) for receiving the signal to be demodulated, comprising a delay line (100) for delaying the signal on the output of the receiving circuit and a mixer (102) for mixing the input and output signals of the delay line,
   - a frequency discrimination circuit (105) which is connected to the output of the mixer in order to apply the information to a user circuit.

5. An information transmission device, comprising at least one information sending device as claimed in any one of the Claims 1 to 3 and an information receiving device as claimed in Claim 4.

6. An information transmission device, comprising transceiver members, characterized in that each transceiver member is formed by an information sending device as claimed in any one of the Claims 1 to 3 and an information receiving device as claimed in Claim 4.

7. An information transmission device as claimed in Claim 6, characterized in that it comprises an alternation control enabling alternating transmission and reception.

FIG.1

FIG.2

7

FIG. 3

FIG. 4

FIG. 5